# EUROPÄISCHE PATENTSCHRIFT

(11) **EP 0 764 078 B1**
(45) Veröffentlichungstag und Bekanntmachung des Hinweises auf die Patenterteilung: **09.12.1998**
(21) Anmeldenummer: 96909173.5
(22) Anmeldetag: 04.04.1996
(51) Int. Cl.: B29C 55/16

(54) **VORRICHTUNG ZUR GESCHWINDIGKEITSANPASSUNG VON LÄNGS EINER SCHIENENANORDNUNG BEWEGBAREN WAGEN**
DEVICE FOR MATCHING SPEEDS OF CARRIAGE UNITS CAPABLE OF MOVING ALONG A RAIL
DISPOSITIF DE CORRECTION DE LA VITESSE DE CHARIOTS POUVANT SE DEPLACER LE LONG D'UN SYSTEME DE VOIE

(30) Priorität: 07.04.1995 DE 19513301
(43) Veröffentlichungstag der Anmeldung: 26.03.1997
(73) Patentinhaber: Brückner Maschinenbau GmbH, 83313 Siegsdorf (DE)
(72) Erfinder: BREIL, Jürgen, 83355 Grabenstätt (DE); OEDL, Günter, 5020 Salzburg (AT); LINDNER, Paul, 5302 Henndorf (AT); RÜHLEMANN, Ulrich, 83355 Grabenstätt (DE); SIEBER, Bernd, 01307 Dresden (DE)
(74) Vertreter: Flach, Dieter Rolf Paul, Dipl.-Phys.
(86) Internationale Anmeldenummer: EP9601491
(87) Internationale Veröffentlichungsnummer: WO9631334

(56) Entgegenhaltungen:
- DE-A- 3 023 505
- DE-A-19 513 301
- US-A- 5 072 493

## Beschreibung

Die Erfindung betrifft eine Vorrichtung zur Geschwindigkeitsanpassung von längs einer Schienenanordnung bewegbaren Wagen, insbesondere für längs einer Schienenanordnung verfahrbaren Kluppen für den Weitertransport einer bewegten Materialbahn vorzugsweise in einer Kunststoff-Reckanlage.

Beispielsweise bei Längs- oder Simultan-Reckanlagen für Kunststoff-Folienbahnen wird die zu reckende Folienbahn im Einlaufbereich von links und rechts der bewegten Materialbahn vorgesehenen Kluppen ergriffen, die längs an der umlaufenden Führungsbahn unter zunehmender Beschleunigung unter Abstandsvergrößerung zueinander fortbewegt werden. In der sogenannten Auslaufzone nach Beendigung des Reckvorganges geben die Kluppen den Rand der eingespannt gehaltenen Kunststoff-Folienbahn frei und laufen auf einer umlaufenden Bahn wieder zum Einlaufbereich zurück.

Insbesondere im Auslaufbereich (aber nicht nur dort) besteht dann das Problem, daß die einzelnen Kluppen wieder auf eine niedrigere Geschwindigkeit abgebremst werden müssen.

Ein derartiges Problem stellt sich beispielsweise bei einer aus der US 5,072,493 bekannten Simultan-Reckanlage, bei welcher die Kluppen bzw. Kluppenwagen längs eines Führungsschienensystems mittels Linearmotoren angetrieben und verfahren werden. Insbesondere am Übergang von der Rückführung zur Einlaufumkehrung müssen dabei die einzelnen getrennt und unabhängig voneinander mittels eines Linearmotorantriebes verfahrbaren Kluppenwagen wieder auf ein anderes Geschwindigkeitsniveau umgesteuert werden.

Gerade im Fall von mittels Linearmotoren angetriebenen Kluppen ist es grundsätzlich möglich, z.B. im Auslaufbereich (auf welchen die Kluppen also wieder zum Einlaufbereich auf einer Kurvenbahn zurückgeführt werden) die gewünschte Bremswirkung ebenfalls über die vorgesehenen Linearmotoren vorzunehmen. In einem derartigen Fall könnten die Linearmotoren nach dem Wirkprinzip eines Hysteresemotors benutzt werden. Dabei schieben die in der Rückführung befindlichen Linearmotoren die Kluppen (die einen Magnetwerkstoff mit Hysterese tragen) durch die Einlaufumkehrung, in deren Bereich kein Antrieb vorgesehen ist. Die an sich einfache Anordnung bietet den Nachteil, daß die Kluppen auf einer längeren Strecke in ihrem Bewegungsablauf nicht mehr beeinflußbar sind, und daß an den Kluppen zusätzlich Magnetmaterial mit Hystereseeigenschaft angebracht werden muß. Die mit dem Hysterese-Effekt erzeugbaren Kräfte sind gering, weshalb eine längere Antriebsstrecke vorhanden sein muß, um die erforderlichen Endkräfte zu erreichen.

Von daher ist auch bereits vorgeschlagen worden, eine Scheibe mit einem Reibbelag am Umfang an einer Auslaufumkehrung so vorzusehen, daß die Kluppen gegen das Reibrad gepreßt werden und durch den Reibschluß der Bewegung des Rades in Umfangsrichtung folgen. Nachteilig ist bei einer derartig mechanisch wirkenden Einrichtung jedoch der zwangsläufig gegebene Verschleiß an der Reibstelle, der vor allem mit der Größe der Geschwindigkeitsdifferenz zwischen der Geschwindigkeit der Kluppe und der Umfangsgeschwindigkeit des Rades wächst. Außerdem tritt eine zusätzlich hohe Beanspruchung an der Berührungsstelle von Kluppe und Laufschiene auf. Im Falle eines Reibbelagwechsels muß die gesamte Anlage stillgesetzt werden.

Bei einer weiteren aus der US 3,247,544 bekannten Anlage werden die Kluppen durch sternförmige Kammern, die sich auf einem Rad befinden, formschlüssig mitgenommen. Die Geschwindigkeit ändert sich durch eine radiale Bewegung auf dem mit konstanter Drehzahl rotierenden Rad. Auch hier erfolgt also die Geschwindigkeitsanpassung mechanisch, wobei bei dieser Anordnung der Verschleiß an der Berührungsstelle zwischen den Kammern und der Kluppe auftritt. Unterschiedliche Abstände zwischen Kluppen können nicht ausgeglichen werden. Die Differenzen der Geschwindigkeiten zwischen dem Rad und der Kluppe äußern sich dabei als Stöße beim Einlauf.

Aufgabe der vorliegenden Erfindung ist es von daher eine verbesserte Lösung zu schaffen, bei welcher längs einer Schienenanordnung verfahrbare Wagen, insbesondere längs einer Schienenanordnung einzeln verfahrbare Kluppen auf verbesserter Weise bewegt, gebremst und/oder beschleunigt werden können, und zwar bevorzugt im Bereich eines einen Bogenabschnitt aufweisenden Streckenabschnittes. Insbesondere soll es mit einfachen Mitteln möglich sein, gezielt den Abstand zwischen zwei einlaufenden Kluppen bis zur Berührung der Kluppen zu verringern.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Mittels der Erfindung ist es mit einfachen Mitteln möglich, vorhandene unterschiedliche Geschwindigkeiten zwischen den einzelnen Wägen oder Kluppen auszugleichen, d.h. insbesondere im Falle einer Kunststoff-Simultanreckanlage den Abstand zwischen zwei Kluppen im Auslaufbereich bis zur Berührung der Kluppen zu verringern. Dadurch ist es erfindungsgemäß auch möglich, den Abstand zwischen zwei Kluppen auf Null herunterzufahren, um den sogenannten Stack (d.h. die Aufreihung der Kluppen) so zu bilden, daß die einzelnen Kluppen sich gegenseitig kontaktieren und die jeweils zuletzt einlaufenden Kluppen die in Vorschubrichtung vorlaufenden Kluppen durch Übertragung einer Vorschub-Kraft weiter befördern.

Die Erfindung läßt sich gegenüber herkömmlichen Lösungen auf verblüffend einfache Weise umsetzen.

Der Kern der Erfindung besteht darin, daß ein an sich bekanntes Wirbelstromrad verwendet wird. Der Führungsabschnitt verläuft über eine Teilstrecke in der Regel bogenförmig über dieses Wirbelstromrad, wobei an den Kluppen eine Magnetanordnung vorgesehen ist. Die Wirkung ist aber nunmehr derart, daß hierüber nicht nur Kluppen, die sich mit einer höheren Geschwindigkeit als die tangentiale Umgangsgeschwindigkeit der Wirbelstromscheibe bewegen, gebremst werden, sondern daß auch umgekehrt Kluppen mit einer niedrigeren Geschwindigkeit als die entsprechende tangentiale Umfangsgeschwindigkeit der Wirbelstromscheibe hierüber beschleunigt werden. Mit anderen Worten treten also immer dann, wenn zwischen der Wirbelstromscheibe und der sich hierüber fortbewegten Kluppe Relativgeschwindigkeiten auftreten, in der Scheibe Wirbelströme auf, unter deren Wirkung die Kluppen je nach Richtung und Größe der Relativgeschwindigkeit entweder gebremst, beschleunigt oder gleichförmig weiterbewegt werden. Dadurch erfolgt eine automatische Anpassung der unterschiedlichen Geschwindigkeiten der einlaufenden Kluppen hin zu einer als optimal gewünschten gemeinsamen Kluppengeschwindigkeit.

Die gewünschte Endgeschwindigkeit kann problemlos durch Einstellung einer gewünschten Antriebsgeschwindigkeit für das Wirbelstromrad eingestellt werden.

Als besonders günstig erweist sich, daß die durch den Abbremseffekt der durch das Wirbelstromrad abgebremsten einlaufenden Kluppen erzeugte Energie an das Wirbelstromrad abgegeben wird. Diese Energie kann vom Wirbelstromrad wieder an die im Stack befindlichen Kluppen abgegeben werden, so daß über die zuletzt einlaufenden abgebremsten Kluppen Vorschubkräfte eingeleitet werden, worüber die zuvor befindlichen aufgelaufenen Kluppen weiter geschoben werden.

Durch diese günstige Energiebilanz muß aus dem Stromnetz nur noch so weit Energie entnommen werden, wie dies für die Aufrechterhaltung der Bewegung des Wirbelstromrades notwendig ist. Erweist sich, daß insgesamt die Bremswirkung höher ist als die benötigte Energie für das Wirbelstromrad, so kann hierüber sogar eine Rückspeisung in das Stromnetz erfolgen.

Die wesentlichen Vorteile sind also einmal die berührungslose Übertragung der Kräfte von der Kluppe auf die Wirbelstromscheibe oder umgekehrt, und daß dabei bei einem unter energetischen Gesichtspunkten günstigsten Wirkungsgrad vor allem auch keine weiteren Synchronisierungsmaßnahmen erforderlich sind. Vor allem benötigen aber die Kluppen selbst keine zusätzlichen Teile zur Umsetzung und Realisierung dieser vorteilhaften Wirkung.

Damit kann die Lösung insgesamt auch als höchst kostengünstig bezeichnet werden.

Anordnungen zum Bremsen von bewegten Teilen mittels Wirbelströme sind natürlich längst bekannt. Diesen Anordnungen gemeinsam ist jedoch stets ein einziger feststehender Teil (nämlich die beidseitig der elektrisch leitenden Wirbelstromscheibe sitzenden Magnete) und ein beweglicher Teil (nämlich die rotierende Wirbelstromscheibe). In der sich drehenden elektrischen Scheibe oder Platte werden durch die festehenden Magnete Wirbelströme induziert, die bekanntermaßen bremsend wirken. Solche Anordnungen sind beispielsweise aus der DE 29 24 225 A1 wie der CH 59 13 78 bekannt.

Grundsätzlich ähnliche Anordnungen kommen auch in sogenannten Induktionskupplungen zum Einsatz. Dabei werden zwischen zwei Wellen mittels der Kraftwirkungen der Wirbelströme Drehmomente übertragen.

Im vorliegenden Fall werden jedoch die grundsätzlich bekannten physikalischen Effekte der Wirbelstrombildung dazu benutzt, Wagen, d.h. insbesondere im Falle einer Folien-Reckanlage und dabei wiederum vor allem bei einer Simultan-Reckanlage einzeln antreibbare Kluppen nunmehr gezielt einzeln zu bremsen bzw. bei entsprechendem Geschwindigkeitsniveau weiter mitzuführen oder sogar wieder bei niedriger Geschwindigkeit auf dieses Geschwindigkeitsniveau anzuheben, und dies vor allem in einem Streckenbereich, in dem auf vergleichsweise kurzer Distanz die Geschwindigkeit der einzeln einlaufenden Kluppen sehr stark differiert.

Bevorzugt werden an den bewegten Wagen/Kluppen zwei Magnete mit unterschiedlich ausgerichteter Polrichtung bezogen auf den Wirbelstromkörper eingesetzt. Möglich ist aber auch, daß nur ein einziger Magnet verwendet wird. Der Wirbelstromkörper selbst besteht vorzugsweise aus gut leitfähigem Material (beispielsweise Kupfer), das selbst nicht ferromagnetisch sein muß. Bevorzugt ist unterhalb dieser elektrisch leitenden Schicht oder des elektrisch leitenden Wirbelstromkörpers überhaupt ein magnetischer Rückschluß unter Verwendung eines ferromagnetischen Materials vorgesehen. Der Wirbelstromkörper kann aber ebenso aus ferromagnetischem Material bestehen, der mit einer dünnen leitenden Schicht beispielsweise aus Kupfer auf der den bewegten Wagen zugewandt liegenden Seite überzogen ist. Es ist aber auch genauso ein Wirbelstromkörper möglich, der aus elektrisch möglichst gut leitendem, ferromagnetischem Material besteht, so daß ein separater magnetischer Rückschluß nicht notwendig ist.

Schließlich ist es erfindungsgemäß auch möglich, Kompensationseinrichtungen vorzusehen, um die Anziehungskräfte zumindest ansatzweise auszugleichen, die durch die magnetische Wechselwirkung zwischen dem auf den bewegten Wagen jeweils zumindest vorgesehenen einen Magneten und dem Wirbelstromkörper bzw. dem auf dem Wirbelstromkörper vorgesehenen magnetischen Rückschluß enstehen.

Das erfindungsgemäße Prinzip kann beispielsweise auch bei der Kunststoff-Folienreckanlage auf der umlaufenden Schienenanordnung mehrfach eingesetzt werden. Ein Einsatz ist selbst bei vom Prinzip her gerader Streckenführung möglich.

Die Erfindung wird nachfolgend anhand von Zeichnungen näher beschrieben. Dabei zeigen im einzelnen:
- Figur 1a :: eine schematische perspektivische Detaildarstellung zur Erläuterung des Wirkungsprinzipes;
- Figur 1b :: eine im größeren Detail wiedergegebene Darstellung entsprechend zu Figur 1a;
- Figur 2 :: ein Diagramm zur Erläuterung der Kraftübertragung zwischen Kluppen und Wirbelstromrad;
- Figur 3 :: ein weiteres Diagramm zur Verdeutlichung der Geschwindigkeitsänderung der über die Vorrichtung beeinflußten Kluppen;
- Figur 4 :: eine schematische Draufsicht zur Verdeutlichung des Prinzips bei einer im wesentlichen gerade verlaufender Streckenführung; und
- Figur 5 :: eine schematische auszugsweise Querschnittdarstellung durch ein abgewandeltes Ausführungsbeispiel.

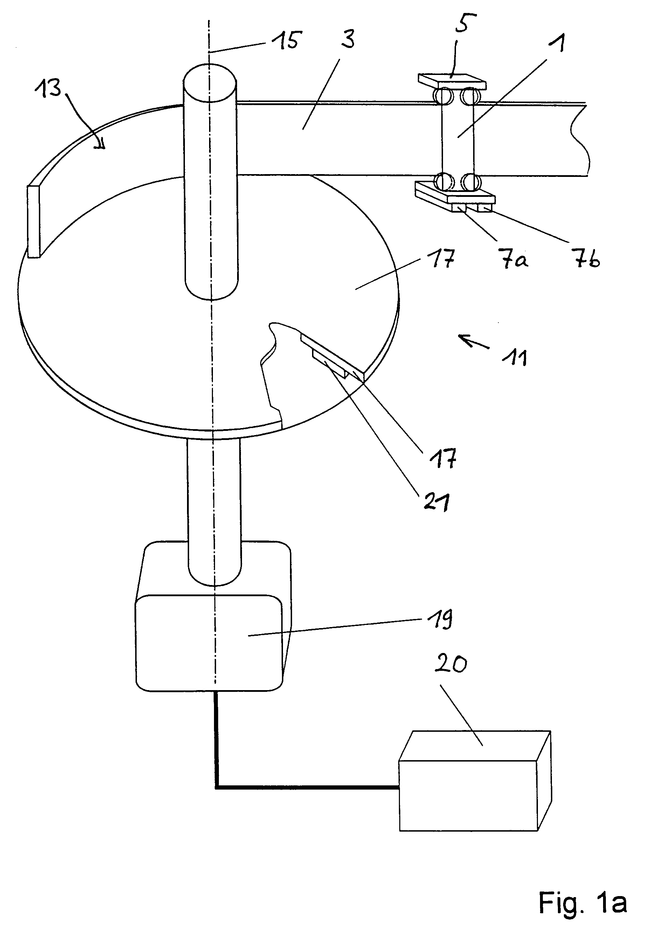

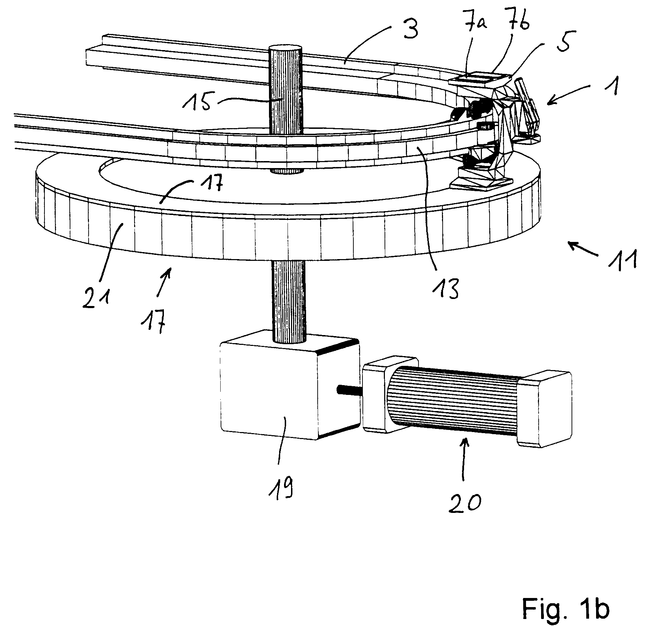

Die anhand von Figur 1a und 1b beschriebene Vorrichtung kann beispielsweise in einer Simultan-Kunststoffolien-Reckanlage zum Einsatz kommen, wie sie grundsätzlich gemäß der US 5,072,493 bekannt ist.

Daraus ist zu entnehmen, daß in einer derartigen eine Quer- und Längsreckung bewirkenden Simultan-Reckanlage die zu reckende Kunststoffolienbahn jeweils seitlich von auf einer umlaufenden Schienenanordnung verfahrbaren Kluppen im Einlaufbereich am Rand ergriffen, im nachfolgenden Reckbereich in Längs- und Querrichtung gestreckt und am Auslaufbereich wieder freigegeben wird. Danach werden die Kluppen über eine Auslaufumkehrung unter Bildung des sogenannten Stack-Bereiches unter Verringerung des Kluppenabstandes auf Null (so daß die Kluppen unter Berührung untereinander vorgeschoben werden) wieder zum Einlauf zurückkehren.

In Figur 1 ist nunmehr ein Auslauf einer Simultan-Kunststoffolien-Reckanlage gezeigt, wie er an einer Seite der fortbewegten Materialbahn vorgesehen ist.

Dort ist eine Kluppe bzw. ein Kluppenwagen 1 beispielhaft und vereinfacht gezeigt, der längs einer nachfolgend teilweise auch als Führungsschienenanordnung bezeichneten Führungsschiene 3 bewegt wird. Wie nur anhand von Figur 1b angedeutet ist, ist auf dem Kluppenwagen üblicherweise ein Kluppenhebel und ein Kluppentisch vorgesehen, an welchem der Rand einer fortzubewegenden Materialbahn ergriffen und gespannt werden kann.

Der in Figur 1a angedeutete und in Figur 1b konkreter gezeigte Kluppenwagen 1 hat an seiner Unterseite zwei mit unterschiedlicher Polrichtung in Vertikalrichtung zum Kluppenwagen 1 ausgerichtete Permanentmagnete 7a und 7b. Auch wenn im folgenden Ausführungsbeispiel immer von Permanentmagneten gesprochen wird, können natürlich grundsätzlich auch elektrisch erregbare Magnete, insbesondere Spulenmagnete verwendet werden. In der Regel wird auch an der Oberseite 5 eine vom Prinzip her entsprechende Anordnung unter Verwendung von beispielsweise ebenfalls zwei Magneten vorgesehen sein.

Dann können als Antriebseinrichtung Linearmotor-Antriebe vorgesehen sein, die beispielsweise unterhalb der Magneten 7a, 7b in einem geringen Luftabstand dazu längs der Führungsstrecke vorgesehen sind. Sind auch an der oberen Anbauplatte 5 entsprechende Magnete vorgesehen, so kann auch ein zusätzlicher Linearmotorantrieb oberhalb des Kluppenwagens 1 vorgesehen sein. Darüber können gesteuert beispielsweise entsprechend der US 5,072,493 die einzelnen Kluppen auf ihrer Umlaufbahn angetrieben und fortbewegt werden. Es wird insoweit beispielsweise auf den Of-fenbarungsgehalt dieser US 5,072,493 verwiesen.

Im Rück- oder Auslaufbereich 11 laufen nunmehr die einzelnen Kluppenwagen 1 nach Freigabe der bewegten und in Figur 1 nicht näher gezeigten Materialbahn in einen Bogenabschnitt 13 der Führungsschienen-Anordnung 3 ein. Die Anlage umfaßt ferner eine um eine senkrechte Achse 15 drehbare und elektrisch leitfähige Wirbelstromscheibe 17. Diese wird mittels eines Motors 19 angetrieben. Der Motor ist dabei beispielsweise in allen vier Quadranten des Drehzahl-Drehmoment-Feldes betreibbar. Es kann auch jederzeit eine andere Wirbelstromscheibe verwendet werden, die beispielsweise sogar grundsätzlich aus nicht leitendem Material besteht, sofern eine leitende Oberfläche oder Schicht auf dieser Wirbelstromscheibe vorgesehen ist. Dabei werden bevorzugt gute leitfähige nicht-ferromagnetische Materialien verwendet, wie beispielsweise Kupfer.

Die Wirbelstromscheibe 17 ist nunmehr an der Auslaufumkehrung (oder beispielsweise ebenso im Falle einer Einlaufumkehrung oder an anderer Stelle) so angeordnet, daß die mit Magneten 7a, 7b bestückten Kluppenwagen 1 etwa tangential im Bereich der Wirbelstromscheibe 17 einlaufen und dann auf einem Teil des Umfanges benachbart und oberhalb der Scheibe umlaufen und diese bevorzugt ebenfalls wieder zumindest näherungsweise tangential verlassen.

Wie bereits aus den Zeichnungen ersichtlich ist, sind die Wirkflächen der Magnete 7a, 7b parallel zur Oberfläche der Wirbelstromscheibe 17 ausgerichtet.

Im gezeigten Ausführungsbeispiel gemäß Figur 1a ist ferner an der Unterseite der Wirbelstromscheibe 17, also gegenüberliegend zu der Umlaufbahn der Führungsschiene 3, an der Wirbelstromscheibe 17 festsitzend ein magnetischer Rückschluß 21 vorgesehen. Es handelt sich hierbei um einen ringstreifenförmigen Materialabschnitt aus magnetisch gut leitendem Material, insbesondere ferromagnetischen Material.

Die Führungsschiene, die Höhe der Kluppenwagen und die Scheibe sind so aufeinander abgestimmt und dimensioniert, daß zwischen der Unterseite der Permanentmagnete 7a, 7b und der Oberseite der Wirbelstromscheibe 17 ein zumindest geringer Luftspalt verbleibt.

Laufen die Kluppenwagen 1 unabhängig von ihrer Geschwindigkeit in die Auslaufumkehrung ein, so durchsetzen die Magnetlinien der Permanentmagnete 7a, 7b die elektrisch leitende Wirbelstromscheibe 17. Die magnetischen Kraftlinien verlaufen dabei von dem einen an der Unterseite des Kluppenwagens 1 vorgesehenen Magneten 7a über die Wirbelstromscheibe 17 und dem magnetischen an der Unterseite der Scheibe sitzenden mitrotierenden magnetischen Rückschluß 21 und von dort zurück durch die Wirbelstromscheibe hindurch zu dem zweiten Magneten 7b, der mit seinem Magnetpol umgekehrt zum ersten Magneten 7a ausgerichtet ist. Aufgrund des bestehenden Luftspaltes besteht kein Berührungskontakt zwischen den Magneten 7a, 7b und der Wirbelstromscheibe 17.

Treten zwischen der Wirbelstromscheibe 17 und den einlaufenden Kluppen 1 Relativgeschwindigkeiten auf, dann entstehen in der elektrisch leitenden Scheibe 17 Wirbelströme, unter deren Wirkung die Kluppen 1 nach Richtung und Größe der Relativgeschwindigkeit gebremst, beschleunigt oder gleichförmig weiter bewegt werden.

Ist der elektrische Motor 19 mit einem Stellorgan 20 verbunden, so läßt sich darüber eine bestimmte Drehgeschwindigkeit und damit eine bestimmte Umfangsgeschwindigkeit (d.h. eine bestimmte Umfangsgeschwindigkeit im Bereich der Führungsschiene 3 bezogen auf die Achse 4) einstellen und vorgeben.

Bei dem Ausführungsbeispiel gemäß Figur 1b ist der Wirbelstromkörper 17 als Ring ausgebildet. Er besteht beispielsweise aus Kupfer in einer Dicke von 2 bis 4 mm. Die in Form eines Ringes ausgebildete Wirbelstromscheibe 17 gemäß Figur 1b sitzt auf einer mit der Antriebsachse 15 fest verbundenen Scheibe 21, insbesondere Stahlscheibe 21, die gleichzeitig den magnetischen Rückschluß 21 bildet. Auch hieraus ist ersichtlich, daß der Wirbelstromkörper 17 und der gegebenenfalls vorgesehene magnetische Rückschluß 21 nur in einem Ringbereich vorgesehen sein muß, über welchen in einem Teilkreisbereich der Kluppenwagen 1 längs der Führungsschiene 3 vorüberbewegt wird.

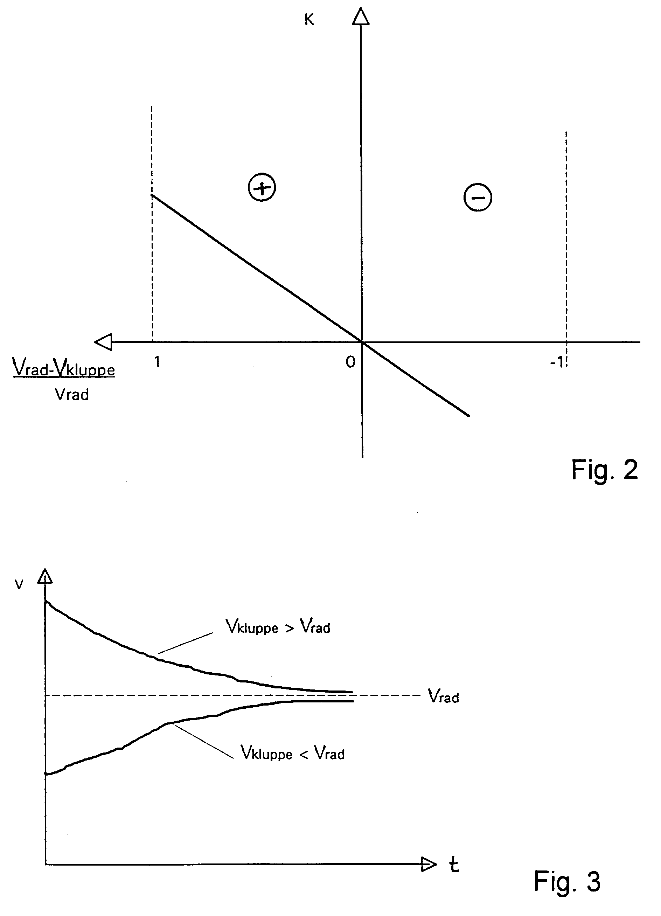

Anhand des Diagrammes nach Figur 2 ist beispielhaft gezeigt, welche Kräfte und in welche Richtung die Kräfte bei unterschiedlichen Geschwindigkeiten zwischen Kluppe 1 und entsprechender Umfangsgeschwindigkeit der Wirbelstromscheibe 17 auftreten bzw. übertragen werden.

In Figur 2 ist dabei über der Horizontalachse die Geschwindigkeitsdifferenz zwischen Umfangsgeschwindigkeit des Wirbelstromrades und der Geschwindigkeit der Kluppe geteilt durch die Umfangsgeschwindigkeit des Wirbelstromrades und auf der Vertikalachse die auf die Kluppe wirkenden Kräfte K eingezeichnet.

Ist die Umfangsgeschwindigkeit V_{rad} der Wirbelstromscheibe 17 benachbart, d.h. bezogen auf die Achse 15 mit gleichem Radialabstand dazu wie die Führungsschiene 3 größer als die Geschwindigkeit Vₖₗᵤₚₚₑ, so erfolgt eine Kraftübertragung aufgrund des Wirbelstromeffektes von der Scheibe auf die Kluppe, mit der Tendenz die Kluppengeschwindigkeit zu erhöhen. Dies ist in Figur 2 mit einem Plus-Zeichen gekennzeichnet.

Ist die Differenz aus V_{rad} - Vₖₗᵤₚₚₑ negativ, d.h. daß die Kluppengeschwindigkeit größer ist als die relative Umfangsgeschwindigkeit der Wirbelstromscheibe 17, dann werden die einzelnen Kluppen 1 gebremst und geben ihre Energie an die Wirbelstromscheibe 17 ab.

Ist die Geschwindigkeitsdifferenz zwischen der Umfangsgeschwindigkeit der Wirbelstromscheibe und der Kluppe Null oder annähernd Null, so wird die Kluppe quasi kraftneutral über die Wirbelstromscheibe hinwegbewegt.

Anhand von Figur 3 ist dabei für die vorstehend erläuterten Verhältnisse die sich ändernde Geschwindigkeit gegenüber der Zeit t wiedergegeben, und zwar einmal in Abhängigkeit davon, ob die Anfangsgeschwindigkeit der Kluppe größer oder kleiner als die Umfangsdrehgeschwindigkeit der Wirbelstromscheibe 17 ist. Daraus ist ersichtlich, daß schneller einlaufende Kluppen abgebremst und langsamer laufende Kluppen beschleunigt werden, und zwar hin zu einem Grenzwert, der der Umfangsgeschwindigkeit der Wirbelstromscheibe 17 benachbart zur Führungsschiene 5 (also im unmittelbaren Koppelbereich zu den Permanentmagneten 7a, 7b) entspricht.

Dabei kann der vorstehend erwähnte Geschwindigkeitsgrenzwert, zu dem die einlaufenden Kluppen hin beschleunigt oder abgebremst werden, durch das Stellorgan entsprechend eingestellt und vorgegeben werden. Aber selbst bei Verwendung einer nichtmotorisch antreibbaren Wirbelstromscheibe würde durch die Wechselwirkung zwischen den einlaufenden Kluppen und der Wirbelstromscheibe diese in gewisse Rotation versetzt werden, bis sich eine Durchschnittsgeschwindigkeit herausstellt, bei welcher die von den abgebremsten Kluppen auf die Wirbelstromscheibe übertragene Energie und die über die Wirbelstromscheibe an langsamere Kluppen abgegebene Energie (abgesehen von Reibungsverlusten) im dynamischen Gleichgewicht stehen.

Besonders günstige Ergebnisse ergeben sich insbesondere dann, wenn die Dicke der Wirbelstromscheibe 17 etwa in Größe des Luftspaltes liegt. Dabei wird für die Wirbelstromscheibe 17 elektrisch leitendes möglichst nicht-ferromagnetisches Material verwendet.

Grundsätzlich kann auch abweichend von der in der Zeichnung dargestellten Wirbelstromscheibe 17 ein vergleichsweise dick bemessener Wirbelstromzylinder 17 verwendet werden. In diesem Fall trägt die Zylindermantelfläche eine Platierung aus elektrisch leitfähigem Material, unter der der in der Zeichnung dargestellte magnetische Rückschluß angeordnet ist. Die Wirkflächen der Magnete sind in diesem Falle nicht senkrecht zur Achse 15, sondern parallel dazu, d.h. praktisch parallel zur zylindrischen Manteloberfläche ausgerichtet.

Aus dem zuletzt genannten Beispiel ist ersichtlich, daß der Wirbelstromkörper nicht nur in Form einer Scheibe und nicht nur in Form eines Zylinders oder Zylindermantels, sondern auch mit einer anderen Rotationsform ausgebildet sein kann, beispielsweise in Form eines Kegels oder Kegelstumpfes, wobei die Wirkflächen der Magneten 7a, 7b stets an die entsprechende Neigung und Ausrichtung der Oberfläche des Wirbelstromkörpers unter Ausbildung eines geringen Luftspaltes angepaßt sind.

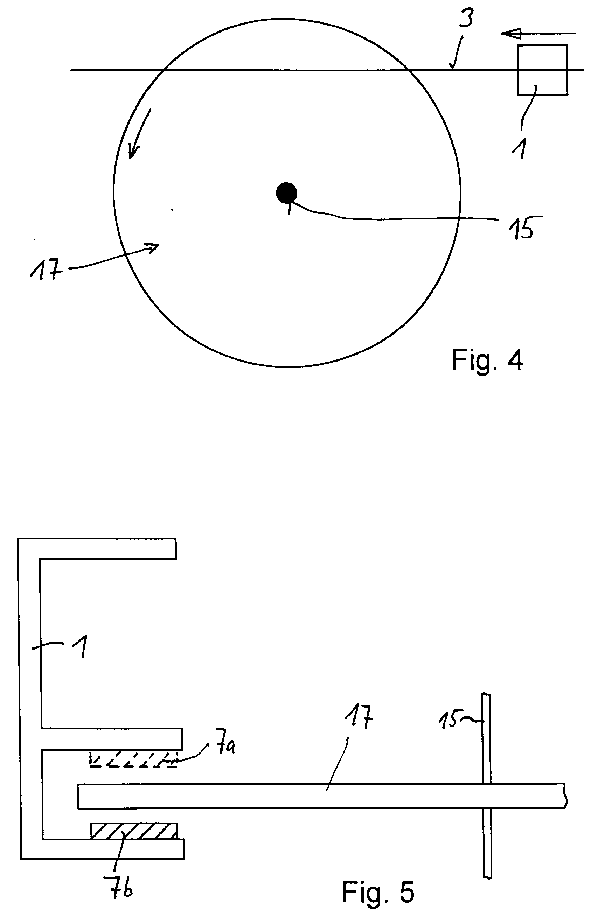

Eine derartig beschriebene Geschwindigkeitsänderungsvorrichtung kann, wie erwähnt, nicht nur im Auslauf, sondern ebenso in dem Einlauf beispielsweise einer Kunststoffolien-Reckanlage vorgesehen sein. Sie kann aber ebenso auch am Übergangsbereich von der Einlaufzone zur Streckzone vorgesehen sein, auf welcher sich die Kluppen in der Regel mit einer Komponente nach außen von der Mittellängsachse der Folienbahn weg bewegen. Aber auch an anderen Stellen einer umlaufenden Bahn ist eine derartige Vorrichtung möglich. Dabei ist sogar denkbar, daß eine Führungsschiene im tangentialen Bereich gerade über eine derartige Wirbelstromscheibe 17 hinweg verläuft, die - insbesondere bei ausreichend großer Dimensionierung - bewirkt, daß in diesem Bereich die vorbeibewegten Kluppen entsprechend einer gegebenen Geschwindigkeitsdifferenz zwischen Kluppe und Umfangsgeschwindigkeit der Wirbelstromscheibe 17 beschleunigt oder gebremst oder bei gleicher Geschwindigkeit entsprechend fortbewegt werden, wie dies schematisch anhand von Figur 4 in Draufsicht dargestellt ist.

Abweichend von dem anhand von Figur 1a und 1b gezeigten Ausführungsbeispiel können verbesserte Wirkungen auch noch dadurch erzielt werden, daß eine zweite Wirbelstromscheibe 17 verwendet wird, die auf der gleichen Achse 15 sitzt und mit dieser gemeinsam dreht. Dabei ist der Achsabstand zwischen den beiden axial versetzt zueinander liegenden Wirbelstromscheiben 17 an die Höhe der Führungsschiene 3 bzw. der Höhe der Kluppen so angepaßt, daß nunmehr noch ein weiteres Magnetpaar an der zu den Permanentmagneten 7a, 7b gegenüberliegenden Seite vorgesehen ist, so daß eine doppelte Kopplung an beiden Wirbelstromscheiben 17 erzeugt wird. Dies führt zu einer gleichmäßigeren Krafteinleitung zwischen dem Wirbelstromscheibenpaar und den einzelnen Kluppen.

Schließlich kann insbesondere bei der Übertragung von geringeren Kräften unter Umständen auch auf den auf der gegenüberliegenden Seite zu den Kluppen an der Wirbelstromscheibe 17 vorgesehenen magnetischen Rückschluß verzichtet werden.

Die vorstehend erläuterten Ausführungsformen weisen auch den wesentlichen Vorteil auf, daß die geschilderten Magnete gleichzeitig auch als Magnete (in der Regel als Permanentmagnete, obgleich auch elektrisch erregbare Magnete möglich sind) zum Antrieb bei Verwendung von Linearmotoren dienen. Von daher sind keine zusätzlichen Veränderungen oder technischen Maßnahmen an den Kluppe 1 selbst erforderlich, um die erläuterte Wirkungsweise zu realisieren.

Schließlich ist anhand von Figur 5 noch schematisch gezeigt, daß beispielsweise die Kluppen zwei im Axialabstand versetzt zueinander liegende Magnete 7a, 7b aufweisen können, so daß die Wirbelstromscheibe 17 in einen Teilumfangsbereich zwischen die beiden Magnete 7a, 7b eintaucht. Da es nicht zwingend notwendig ist, daß zwei Magnete 7a, 7b vorgesehen sind, ist in dem Ausführungsbeispiel gemäß Figur 5 der obenliegende Magnet 7a nur strichliert eingezeichnet.

In diesem Falle kann auf den magnetischen Rückschluß ebenfalls verzichtet werden, da die von einem Magneten zum anderen Magneten 7a, 7b verlaufenden magnetischen Kraftfeldlinien die Wirbelstromscheibe 17 durchsetzen.

Das zuletzt genannte Beispiel bietet auch den Vorteil, daß keine zusätzlichen Anziehungskräfte zwischen Wirbelkörper, d.h. in der Regel zwischen der Wirbelscheibe 17 und dem in der Regel dort auf der Rückseite verankerten magnetischen Rückschluß und dem Magneten 7a, 7b an der Kluppe auftreten.

Um einen Ausgleich bezüglich den sonst auftretenden magnetischen Anziehungskräften zwischen der Wirbelstromscheibe bzw. dem magnetischen Rückschluß an oder auf der Wirbelstromscheibe und den an der Kluppe (im gezeigten Ausführungsbeispiel unten) sitzenden Magneten 7a, 7b zu erzielen, kann eine entsprechende Kompensationseinrichtung vorgesehen sein. Diese Kompensationseinrichtung kann aus einer dem magnetischen Rückschluß 21 vergleichbaren Anordnung bevorzugt aus ferromagnetischem Material bestehen, die im Axialabstand zur Wirbelscheibe 17 versetzt liegend so angeordnet ist, daß sie mit auf der Oberseite 5 der Kluppenwagen 1 vorgesehenen Magneten eine in umgekehrter Richtung wirkende weitere Anziehungskraft erzeugt. Dazu wäre ein dem magnetischen Rückschluß 21 vergleichbarer weiterer Rückschluß beispielsweise scheiben- oder ringförmig so angeordnet, daß die auf der Oberseite 5 der Kluppenwagen 1 vorgesehenen Magnete in geringem Luftabstand gegensinnig zu den unteren Magneten 7a, 7b, d.h. im gezeigten Ausführungsbeispiel unterhalb des dortigen Rückschlusses vorbeibewegt werden würden. Dieser zusätzliche mit den an der Oberseite 5 der Kluppenwagen 1 vorgesehenen Magneten zusammenwirkende magnetische Rückschluß kann auch feststehend angeordnet sein, da er nur zum Ausgleich der zwischen den Magneten 7a, 7b der Kluppe und der dem Wirbelstromkörper 17 bzw. dem unteren magnetischen Rückschluß 21 auftretenden Anziehungskräfte dient.

## Patentansprüche

1. Vorrichtung zur Geschwindigkeitsanpassung von längs einer Schienenanordnung (3) verfahrbaren Wagen (1), insbesondere für längs einer Schienenanordnung (3) verfahrbare Kluppen für den Weitertransport einer bewegten Materialbahn vorzugsweise in einer Kunststoff-Reckanlage, **gekennzeichnet durch** die folgenden Merkmale
- es ist ein rotierender und elektrisch leitender vorzugsweise in Form einer Wirbelstromscheibe oder eines Wirbelstromzylinders ausgebildeter Wirbelstromkörper (17) vorgesehen,
- die Führungsschienenanordnung (3) läuft zumindest über einen Teilbereich des Wirbelstromkörpers (17) mit tangentialer Komponente hinweg,
- auf den längs der Führungsschienenanordnung (3) verfahrbaren Wagen (1) ist zumindest ein auf der zum Wirbelstromkörper (17) zugewandt liegenden Seite angeordneter Magnet (7a, 7b) vorgesehen oder erregbar, der im Bereich des Wirbelstromkörpers (17) unter Ausbildung eines Luftspaltes über den Wirbelstromkörper (17) hinweg bewegbar ist.

2. Vorrichtung nach Anspruch 1, **dadurch gekennzeichnet**, daß der zumindest eine Magnet (7a, 7b) an den bewegten Wagen (1) so angeordnet ist, daß die von beiden Polen ausgehenden Magnetfeldlinien mit dem Wirbelstromkörper in Wechselwirkung stehen.

3. Vorrichtung nach Anspruch 1 oder 2, **dadurch gekennzeichnet**, daß zumindest zwei Magnete (7a, 7b) an der dem Wirbelstromkörper (17) zugewandt liegenden Seite der verfahrbaren Wagen (1) vorgesehen sind, die mit vorzugsweise unterschiedlicher Polausrichtung bzw. gegensinnig ausgerichteten Magnetfeldvektoren bezogen auf den Wirbelstromkörper (17) angeordnet sind.

4. Vorrichtung nach einem der Ansprüche 1 bis 3, **dadurch gekennzeichnet**, daß die Wagen (1) mit zumindest zwei in Querrichtung zum Verlauf der Führungsschienenanordnung (3) versetzt liegenden Magneten (7a, 7b) versehen sind, wobei der rotierende Wirbelstromkörper (17) in den Abstandsraum zwischen den beiden versetzt liegenden Magneten (7a, 7b) hineinragend rotiert.

5. Vorrichtung nach einem der Ansprüche 1 bis 4, **dadurch gekennzeichnet**, daß gegenüberliegend zu den längs der Führungsschieneneinrichtung (3) verfahrbaren Wagen (1) an dem Wirbelstromkörper (17) bei axialer Betrachtung zumindest im Bereich des Verlaufs der Führungsschienenanordnung (3) ein magnetischer Rückschluß (21) vorgesehen ist.

6. Vorrichtung nach Anspruch 5, **dadurch gekennzeichnet**, daß der magnetische Rückschluß (21) als Materialring oder -scheibe ausgebildet ist, der auf dem Wirbelstromkörper (17) mit diesem mitrotierend sitzt.

7. Vorrichtung nach einem der Ansprüche 1 bis 6, **dadurch gekennzeichnet**, daß zwei im Axialabstand zueinander sitzende vorzugsweise in Form einer Wirbelstromscheibe ausgebildete Wirbelstromkörper (17) vorgesehen sind, zwischen denen in einem Teilumlaufbereich die Führungsschienenanordnung (3) hindurchverläuft, wobei auf dem darauf umlaufenden Wagen (1) an beiden dem jeweiligen Wirbelstromkörper (17) zugewandt liegenden Seiten Magneten (7a, 7b) vorgesehen sind.

8. Vorrichtung nach einem der Ansprüche 1 bis 7, **dadurch gekennzeichnet**, daß der Wirbelstromkörper (17) motorisch, insbesondere elektromotorisch antreibbar ist.

9. Vorrichtung nach einem der Ansprüche 1 bis 8, **dadurch gekennzeichnet**, daß der Wirbelstromkörper (17) mit einem als Generator dienenden Motor in Antriebsverbindung steht.

10. Vorrichtung nach einem der Ansprüche 1 bis 9, **dadurch gekennzeichnet**, daß die Drehgeschwindigkeit des Wirbelstromkörpers (17) und/oder das darüber erzeugte Drehmoment einstell- oder regelbar ist.

11. Vorrichtung nach einem der Ansprüche 1 bis 10, **dadurch gekennzeichnet,** daß der Wirbelstromkörper (17) scheiben- oder kegel- bzw. kegelstumpfförmig ausgestaltet ist.

12. Vorrichtung nach einem der Ansprüche 1 bis 10, **dadurch gekennzeichnet**, daß der Wirbelstromkörper (17) zylinderförmig ausgestaltet ist.

13. Vorrichtung nach einem der Ansprüche 1 bis 12, **dadurch gekennzeichnet**, daß der Wirbelstromkörper (17) zumindest an seiner der Führungsschienenanordnung (3) und/oder den darauf verfahrbaren Wagen (1) zugewandt liegenden Seite elektrisch leitend oder zumindest mit einer elektrisch leitenden Schicht versehen ist bzw. aus einer elektrisch leitenden Schicht besteht.

14. Vorrichtung nach Anspruch 13, **dadurch gekennzeichnet**, daß unter der elektrisch leitenden Schicht ein magnetischer Rückschluß (21) sitzt.

15. Vorrichtung nach einem der Ansprüche 1 bis 13, **dadurch gekennzeichnet**, daß der Wirbelstromkörper (17) aus einem Material besteht oder dieses umfaßt, welches sowohl elektrisch leitfähig als auch ferromagnetisch ist.

16. Vorrichtung nach einem der Ansprüche 1 bis 15, **dadurch gekennzeichnet**, daß das Verhältnis zwischen Luftspalt und Dicke des Wirbelstromkörpers (17) bzw. einer auf dem Wirbelstromkörper (17) vorgesehenen leitenden Schicht zwischen 1:4 und 4:1, vorzugsweise zwischen 3:1 und 1:3, insbesondere zwischen 2:1 und 1:2 liegt.

17. Vorrichtung nach einem der Ansprüche 1 bis 16, **dadurch gekennzeichnet**, daß das Verhältnis zwischen Luftspalt und Dicke des Wirbelstromkörpers (17) bzw. einer auf dem Wirbelstromkörper (17) vorgesehenen leitenden Schicht vorzugsweise 1:1 oder annähernd 1:1 beträgt.

18. Vorrichtung nach einem der Ansprüche 1 bis 17, **dadurch gekennzeichnet**, daß an der dem Wirbelstromkörper (17) gegenüberliegenden Seite der verfahrbaren Wagen (1) ein mit auf der dortigen Seite der Wagen (1) vorgesehenen Magneten (5) zusammenwirkender weiterer und vorzugsweise feststehender magnetischer Rückschluß vorgesehen ist.

## Claims

1. Apparatus for adapting the speed of carriages (1) which can be made to travel along a rail arrangement (3), in particular for nippers which can be made to travel along a rail arrangement (3) for the continued transporting of a moving material web, Preferably in a Plastic drawing installation, characterized by the following features
- a rotating and electrically conductive eddy-current body (17), preferably designed in the form of an eddy-current wheel or an eddy-current cylinder, is provided,
- the guide rail arrangement (3) runs at least over and away from a partial region of the eddy-current body (17) with a tangential component,
- on the carriages (1) which can be made to travel along the guide rail arrangement (3) there is provided or can be excited at least one magnet (7a, 7b), which is arranged on the side facing the eddy-current body (17) and, in the region of the eddy-current body (17), can be moved over and away from the eddy-current body (17), with an air gap being formed.

2. Apparatus according to Claim 1, characterized in that the at least one magnet (7a, 7b) is arranged on the moving carriages (1) in such a way that the lines of magnetic flux emanating from the two poles are in interaction with the eddy-current body.

3. Apparatus according to Claim 1 or 2, characterized in that on the side of the travelling carriages (1) facing the eddy-current body (17) there are provided at least two magnets (7a, 7b), which are arranged with preferably different polarity, or oppositely directed magnetic field vectors with respect to the eddy-current body (17).

4. Apparatus according to one of Claims 1 to 3, characterized in that the carriages (1) are provided with at least two magnets (7a, 7b) lying offset in the transverse direction with respect to the running of the guide rail arrangement (3), the rotating eddy-current body (17) rotating while protruding into the spatial distance between the two offset magnets (7a, 7b).

5. Apparatus according to one of Claims 1 to 4, characterized in that on the opposite side than that of the carriages (1) which can be made to travel along the guide rail device (3) a magnetic return (21) is provided on the eddy-current body (17), when viewed axially at least in the region of the running of the guide rail arrangement (3).

6. Apparatus according to Claim 5, characterized in that the magnetic return (21) is designed as a material ring or disk which is fitted on the eddy-current body (17), rotating along with it.

7. Apparatus according to one of Claims 1 to 6, characterized in that there are provided two eddy-current bodies (17), which are situated at an axial distance from each other, are designed preferably in the form of an eddy-current wheel and between which, in a partial circumferential region, the guide rail arrangement (3) runs through, magnets (7a, 7b) being provided on the carriage (1) running round thereupon, on both sides facing the respective eddy-current body (17).

8. Apparatus according to one of Claims 1 to 7, characterized in that the eddy-current body (17) can be driven by a motor, in particular an electric motor.

9. Apparatus according to one of Claims 1 to 8, characterized in that the eddy-current body (17) is in drive connection with a motor serving as a generator.

10. Apparatus according to one of Claims 1 to 9, characterized in that the rotational speed of the eddy-current body (17) and/or the torque generated thereby can be set or can be controlled.

11. Apparatus according to one of Claims 1 to 10, characterized in that the eddy-current body (17) is designed in the form of a disk or cone or truncated cone.

12. Apparatus according to one of Claims 1 to 10, characterized in that the eddy-current body (17) is designed in the form of a cylinder.

13. Apparatus according to one of Claims 1 to 12, characterized in that, at least on its side facing the guide rail arrangement (3) and/or the carriages (1) which can be made to travel thereupon, the eddy-current body (17) is electrically conductive or is at least provided with an electrically conductive layer, or consists of an electrically conductive layer.

14. Apparatus according to Claim 13, characterized in that underneath the electrically conductive layer there is a magnetic return (21).

15. Apparatus according to one of Claims 1 to 13, characterized in that the eddy-current body (17) consists of a material, or comprises a material, which is both electrically conductive and ferromagnetic.

16. Apparatus according to one of Claims 1 to 15, characterized in that the ratio between the air gap and the thickness of the eddy-current body (17), or a conductive layer provided on the eddy-current body (17), lies between 1:4 and 4:1, preferably between 3:1 and 1:3, in particular between 2:1 and 1:2.

17. Apparatus according to one of Claims 1 to 16, characterized in that the ratio between the air gap and the thickness of the eddy-current body (17), or a conductive layer provided on the eddy-current body (17), is preferably 1:1 or approximately 1:1.

18. Apparatus according to one of Claims 1 to 17, characterized in that, on the side of the travelling carriages (1) lying opposite the eddy-current body (17) there is provided a further, and preferably fixed, magnetic return, interacting with magnets (5) provided on that side of the carriages (1).

## Revendications

1. Dispositif de correction de la vitesse de chariots (1) déplaçables le long d'un système de rail (3), en particulier pour des pinces déplaçables sur un système de rail pour le transport d'une nappe de matériau en déplacement dans un système de dressage de matière plastique, caractérisé en ce que :
- il est prévu un corps à courant de Foucault (17) rotatif et électroconducteur, de préférence sous forme d'un disque à courant de Foucault ou d'un cylindre à courant de Foucault,
- le système de rail de guidage (3) s'étend au moins sur et au-delà d'une région partielle du corps à courant de Foucault (17) avec composante tangentielle,
- sur le chariot (1) déplaçable le long du système de rail de guidage (3) est prévu au moins un aimant (7a, 7b) agencé sur le côté orienté vers le corps à courant de Foucault (17), ledit aimant étant susceptible d'être excité et déplacé dans la région du corps à courant de Foucault (17) au-delà de celui-ci, en formant un entrefer.

2. Dispositif selon la revendication 1, caractérisé en ce que ledit au moins un aimant (7a, 7b) est agencé de telle sorte sur le chariot (1) en déplacement que les lignes de champ magnétique provenant des deux pôles sont en interaction avec le corps à courant de Foucault.

3. Dispositif selon l'une ou l'autre des revendications 1 et 2, caractérisé en ce qu'au moins deux aimants (7a, 7b) sont prévus sur le côté des chariots (1) déplaçables qui est orienté vers le corps à courant de Foucault (17), lesdits chariots étant agencés avec de préférence une orientation polaire différente ou avec des vecteurs de champ magnétique dirigés en sens opposés, par rapport au corps a courant de Foucault (17).

4. Dispositif selon l'une quelconque des revendications 1 à 3, caractérisé en ce que les chariots (1) sont pourvus d'au moins deux aimants (7a, 7b) décalés transversalement par rapport au tracé du système de rail de guidage (3), le corps à courant de Foucault (17) rotatif tournant en faisant saillie dans l'espace d'écartement entre les deux aimants (7a, 7b) situés en décalage.

5. Dispositif selon l'une quelconque des revendications 1 à 4, caractérisé en ce qu'une culasse de reflux (21) magnétique est prévue vis-à-vis des chariots (1) déplaçables le long du système de rail de guidage (3) sur le corps à courant de Foucault (17), vu axialement, au moins dans la région du tracé du système à rail de guidage (3).

6. Dispositif selon la revendication 5, caractérisé en ce que la culasse de reflux (21) magnétique est réalisée sous forme d'anneau ou de disque de matériau qui est placé sur le corps à courant de Foucault (17) et qui tourne avec celui-ci.

7. Dispositif selon l'une quelconque des revendications 1 à 6, caractérisé en ce qu'il est prévu deux corps à courant de Foucault (17) placés en écartement axial l'un de l'autre, de préférence sous forme d'un disque à courant de Foucault, entre lesquels le système à rail de guidage (3) s'étend dans une région périphérique partielle, des aimants (7a, 7b) étant prévus sur le chariot (1) circulant sur ledit système, sur les deux côtés orientés vers le corps à courant de Foucault (17) respectif.

8. Dispositif selon l'une quelconque des revendications 1 à 7, caractérisé en ce que le corps à courant de Foucault (17) peut être entraîné par un moteur, en particulier par un moteur électrique.

9. Dispositif selon l'une quelconque des revendications 1 à 8, caractérisé en ce que le corps à courant de Foucault (17) est en liaison d'entraînement avec un moteur servant de générateur.

10. Dispositif selon l'une quelconque des revendications 1 à 9, caractérisé en ce que la vitesse de rotation du corps à courant de Foucault (17) et/ou le couple engendré par cette vitesse est réglable ou susceptible d'être régulé.

11. Dispositif selon l'une quelconque des revendications 1 à 10, caractérisé en ce que le corps à courant de Foucault (17) est réalisé sous forme de disque, ou de cône, ou de tronc de cône, respectivement.

12. Dispositif selon l'une quelconque des revendications 1 à 10, caractérisé en ce que le corps à courant de Foucault (17) est réalisé sous forme cylindrique.

13. Dispositif selon l'une quelconque des revendications 1 à 12, caractérisé en ce que le corps à courant de Foucault (17) est électroconducteur au moins sur son côté orienté vers le système à rail de guidage (3) et/ou vers les chariots déplaçables sur celui-ci, ou est au moins pourvu d'une couche électroconductrice, ou est constitué par une couche électroconductrice.

14. Dispositif selon la revendication 13, caractérisé en ce qu'une culasse de reflux (21) magnétique est située au-dessous de la couche électroconductrice.

15. Dispositif selon l'une quelconque des revendications 1 à 13, caractérisé en ce que le corps à courant de Foucault (17) est en un matériau non seulement électroconducteur, mais aussi ferromagnétique, ou comprend un tel matériau.

16. Dispositif selon l'une quelconque des revendications 1 à 15, caractérisé en ce que le rapport entre l'entrefer et l'épaisseur du corps à courant de Foucault (17), ou d'une couche conductrice prévue sur le corps à courant de Foucault (17), respectivement, est comprise entre 1:4 et 4:1, de préférence entre 3:1 et 1:3, en particulier entre 2:1 et 1:2.

17. Dispositif selon l'une quelconque des revendications 1 à 16, caractérisé en ce que le rapport entre l'entrefer et l'épaisseur du corps à courant de Foucault (17) ou d'une couche conductrice prévue sur le corps à courant de Foucault (17), respectivement, est de préférence 1:1 ou approximativement de 1:1.

18. Dispositif selon l'une quelconque des revendications 1 à 17, caractérisé en ce qu'il est prévu sur le côté du chariot déplaçable (1) opposé au corps à courant de Foucault (17) une autre culasse à reflux magnétique (21) coopérant avec des aimants (5) prévus sur le même côté du chariot (1), ladite culasse étant de préférence fixe.
